Europäisches Patentamt

European Patent Office

Office européen des brevets

(19)

(11) Veröffentlichungsnummer: **0 056 467**

**A2**

(12) **EUROPÄISCHE PATENTANMELDUNG**

(21) Anmeldenummer: **81110487.6**

(22) Anmeldetag: **16.12.81**

(51) Int. Cl.³: **F 22 B 1/28**
**A 47 J 31/54**

(30) Priorität: **19.01.81 DE 3101509**

(43) Veröffentlichungstag der Anmeldung:
**28.07.82 Patentblatt 82/30**

(84) Benannte Vertragsstaaten:
**AT BE CH FR GB IT LI LU NL SE**

(71) Anmelder: **Nibbe, Bodo Bernd**
**Karlsplatz 6/IV**
**D-8000 München 2(DE)**

(71) Anmelder: **Hirsch, Paul**
**Karl-Theodor-Strasse 91**
**D-8000 München 40(DE)**

(72) Erfinder: **Nibbe, Bodo Bernd**
**Karlsplatz 6/IV**
**D-8000 München 2(DE)**

(72) Erfinder: **Hirsch, Paul**
**Karl-Theodor-Strasse 91**
**D-8000 München 40(DE)**

(74) Vertreter: **Hasse, Wilhelm Dr.**
**Asamstrasse 8**
**D-8000 München 90(DE)**

(54) **Sieder.**

(57) Bei dem zu schützenden Sieder ist die Aufgabe zu lösen, in kürzester Zeit eine kleine Flüssigkeitsmenge zu erhitzen. Diese Aufgabe wird durch ein Gerät gelöst, das einen Wasserraum (10) aufweist, dem ein steuerbares vorzugsweise elektrisches Aufheizsystem zugeordnet ist. In dem Wasserraum wird Dampf erzeugt und der Dampf wird über ein verstellbares Dampfrohr nach außen geleitet. Wird das Dampfrohr nun in die zu erhitzende Flüssigkeit getaucht, erhitzt der durchströmende Dampf diese Flüssigkeit.

Rechtsanwalt Bodo Bernd Nibbe,
Karlsplatz 6/IV, 8000 München 2

Paul Hirsch, Karl-Theodor-Str. 91,
8000 München 40

### Sieder

Die Erfindung betrifft einen Sieder, um Flüssigkeit zu erhitzen.

Zum Erhitzen von Wasser ist beispielsweise ein Tauchsieder bekannt. Er besteht aus einem Griff, an dem ein in sich geschlossenes Heizsystem vorgesehen wird. Taucht man dieses Gerät beispielsweise in Wasser, dann bringt man es nach drei bis zehn Minuten bedingt zum Sieden.

Aufgabe der Erfindung ist es, in kürzester Zeit vorzugsweise eine kleine Flüssigkeitsmenge (z.B. 100 bis 300 ccm) zu erhitzen.

- 2 -

Gelöst wird die gestellte Aufgabe durch die Merkmale
von Anspruch 1 und die der Unteransprüche.

Die Erfindung ist schematisch an einem Beispiel gezeigt.

Der erfindungsgemäße Sieder 1 besteht aus einer Oberhaube 2 und einer Unterhaube 3, die z.B. mittels einer
dichtenden Verschraubung 6 leicht lösbar (zum Öffnen)
miteinander verbunden sind. Jedes andere bekannte Mittel
zum Verbinden ist denkbar. Man kann das ganze System
auch aus einem Stück erstellen und z.B. an einer Stirnseite einen Deckel zum Öffnen vorsehen. In diesen Raum
wird dann das gesamte, nachfolgend beschriebene System
hineingesteckt.

Der untere Raum - der Wasserraum 10 (Dampf-Druckgefäß) -
weist eine Trennwand 7 auf. Durchbrochen ist sie lediglich, um ein Dampfrohr 12 dichtend einzuführen.

Im Inneren des Wasserraumes 10 ist ein Erhitzungsaggregat 8 angeordnet, zweckmäßig so, daß rundherum ein Freiraum zu den benachbarten Wänden gebildet ist (aber nicht
zwingend; das Erhitzungsaggregat 8 könnte beispielsweise
auch an der Trennwand 7 befestigt sein bzw. ein Teil der
Trennwand 7 im oberen Bereich bilden). In diesem Erhitzungsaggregat 8 sind Widerstandsdrähte bekannter Art

- 3 -

angeordnet, so daß dieses Aggregat schnell auf hohe Temperaturen gebracht werden kann. Dabei gehört es zur Erfindung als ein Merkmal, daß im unteren Bereich durch entsprechende Anordnung von Heizspiralen und dgl. das Erhitzen schneller und intensiver erfolgen kann. Im unteren Bereich ist eine Einfüllöffnung mit einer Verschraubung 11 vorgesehen. Bei 11a könnte eine zusätzliche oder nur eine weitere Einfüllöffnung angebracht werden.

Das Einfüllen von Kaltwasser erfolgt an einer dieser Stellen, wobei durch den Unterdruck im nichtgefüllten Wasserraum 10 das Wasser bis zu einer gewissen Höhe angesaugt wird.

Man kann aber auch einen Wasserreservebehälter 19 in diesem Wasserraum vorsehen oder - wie dargestellt - im Schaltraum 4. Das Einfüllen erfolgt hier entsprechend dem Pfeil 18 (hier wird also eine Verschraubung vorgesehen) und im Bedarfsfalle öffnet ein Ventil (selbsttätig oder von außen durch Hand betätigbar), daß entsprechend dem Pfeil 17 das Wasser in den Wasserraum 10 gelangt.

- 4 -

Erkennbar sind Anschlußkabel (Stromzuführungen) 20.
An der Stirnseite der Oberhaube 2 ist ein Schaltknopf
5 vorgesehen. Hier kann es sich um einen Zeitschalter
handeln, der im Gehäuse 22 vorgesehen ist. Dort können
auch sonstige elektrische Einrichtungen wie Anschlüsse,
Kabelführungen, Hitzeschutzschalter, Thermostate, Kippschalter, Zeitschalter usw. untergebracht werden.

Das Gerät funktioniert folgendermaßen. Wird der Schaltknopf 5 betätigt, dann wird der Stromkreis über die Verbindungsleitungen 21 geschlossen und das Erhitzungsaggregat 8 aufgeheizt. Damit wird auch das Wasser in
kürzester Zeit erhitzt, das sich im Wasserraum 10 befindet. Der so erzeugte Dampf strömt (s. Pfeil 15) durch
das Dampfrohr 12 in den außen liegenden Teil des Dampfrohres und gelangt gemäß Pfeil 16 nach außen. Wird der
äußere Teil des Dampfrohres 12 beispielsweise in einen
Flüssigkeitsbehälter eingeführt, dann wird Dampf eingeführt und erhitzt die Flüssigkeit in ganz kurzer Zeit
(beispielsweise in 1o bis 20 Sekunden; hängt natürlich
von der Dampfmenge und der zu erhitzenden Flüssigkeitsmenge ab).

Das Dampfrohr ist im gezeigten Beispiel mehrteilig erstellt. Im Bereich der Dichtung 13 kann es verschwenkt
werden. Entsprechend dem Pfeil 14 kann es bis zu einem

- 5 -

gewissen Grade verlängert oder verkürzt werden (teleskopähnliche Anordnung).

Dank der Wasserstandsanzeige 9 kann man sofort erkennen, wieviel Wasser sich im Wasserraum 10 befindet. In dem Augenblick, wo kein oder zu wenig Wasser sich im Wasserraum 10 befindet, schaltet das Gerät automatisch/den /über Hitzeschutzschalter oder Thermostaten ab.

Dieser Sieder kann in Kleinstbauweise erstellt werden (Taschenformat). Durch den Einschaltvorgang kann eine Zeit beispielsweise von 30 oder 60 Sekunden vorgewählt werden. Der Unterhaube 3 kann eine weitere Haube zugeordnet sein als Isolierummantelung; dann wird man die Wasserstandsanzeige 9 nach außen verlegen. Diese Isolierummantelung und die Unterhaube 3 bilden einen günstigen Raum, in dem eine weitere Wassermenge in Reserve gehalten werden kann.

Alle Teile insbesondere das Erhitzungsaggregat können als Austauschteile erstellt werden.

Außerdem kann ein Druckausgleicher oder eine Drucksicherung vorgesehen werden, um zu verhindern, daß bei zu stark überhitztem Dampf ein Überdruck entsteht.

- 6 -

Verwendbar ist das Gerät auch für andere Zwecke, beispielsweise zum Abdampfen von Gegenständen (beispielsweise Kleider), zum Auftauen von Konserven bzw. zum Erhitzen des Inhaltes von Koservendosen (beispielsweise von Suppen) und dgl. Im gezeigten Beispiel ist das Erhitzungsaggregat 8 zylindrisch dargestellt. Wählt man Ringform, dann ist die Heizfläche vergrößert und das Erhitzen erfolgt in noch kürzerer Zeit.

Das Dampfrohr 12 kann auch unmittelbar aus der Unterhaube 3 herausgeführt und flexibel gestaltet sein.

Da es sich hier aufgabenmäßig um ein sehr kleines insbesondere für den privaten Haushalt bestimmtes Gerät 1 (z.B. als Tischgerät) handelt, kann es z.B. auch auf Reisen im Gepäck raumsparend und leicht unterbringbar mitgenommen werden. Es beansprucht kaum mehr bzw. eher weniger Raum als z.B. ein handelsüblicher Tauchsieder.

Das Gerät 1 kann auch zum Erzeugen von heißem Wasser genutzt werden.

Da beim Abschalten des Gerätes 1 ein Niederdruck im Inneren entsteht, ist die Möglichkeit des Wiederauffüllens mit Wasser dadurch gegeben, daß man das Dampfrohr 12 in einen Wasserbehälter eintaucht (das Wasser wird also eingesaugt).

- 7 -

Zweckmäßig ordnet man dem Dampfrohr 12 in einem beliebigen Bereich ein Rückschlagventil zu und/oder eine Düse.

Es ist auch zweckmäßig, eine Einrichtung zum Blockieren z.B. des Schaltknopfes 5 vorzusehen. Dieser wäre solange blockiert, bis der Aufheizvorgang beendet ist. Schalter dieser Art (z.B. Thermoschalter) sind bekannt. Man kann aber auch einen anderen gesonderten Schalter für diesen Zweck vorsehen.

Zweckmäßig ist es, die Innenseite oder den ganzen Wasserbehälter (und/oder die anderen wasserführenden Teile) aus Kunststoff herzustellen oder Beschichtungen vorzusehen, so daß Kalkablagerungen entfallen, weil das Rohr sich entsprechend dehnt (kaltes/warmes Wasser usw.). Sinngemäß kann man auch zu diesem Zweck einen metallischen oder einen hitzebeständigen Glasbehälter verwenden, den man ebenfalls mit Kunststoff beschichtet.

Ein weiterer Vorteil ist darin zusehen, daß man den Wasserraum 10 unterteilt beispielsweise in zwei ineinandergeschachtelte zylindrische Räume, die aber miteinander verbunden sind. Dadurch wird das Wasser des inneren Raumes schneller erhitzt (geringere Flüssigkeitsmenge) und der Dampf gelangt schneller in das Dampfrohr 12. Da mindestens eine Verbindung zwischen dem Innen- und Außenzylinder besteht, kann Wasser stets an das Erhitzungsaggregat gelangen.

Außerdem können noch Mittel vorgesehen sein, um anfangs
eine größere Heizleistung zu haben. Nach dem Aufheizen
wird nicht mehr eine so hohe Strommenge benötigt; diese
kann dann reduziert werden. Hierfür gibt es an sich bekannte Automaten, die diese Regulierung vornehmen; auch
dieses Merkmal gehört zur Erfindung.

S t ü c k l i s t e

1. = Sieder (Erhitzer zum Verdampfen von Wasser)

2 = Oberhaube

3 = Unterhaube

4 = Schaltraum

5 = Schaltknopf

6 = dichtende Verschraubung

7 = Trennwand

8',8 = Erhitzungsaggregat (vorzugsweise leicht auswechselbar)

9 = Wasserstandsanzeige

10 = Wasserraum (Dampf-Druckgefäß)

11a,11 = Verschraubung mit Einfüllöffnung (Wassereinfüllöffnung)

12 = Dampfrohr

13 = Dichtung

14 = Pfeil

15 = Pfeil

16 = Pfeil

17 = Pfeil

18 = Pfeil

19 = Wasserreservebehälter

20 = Stromzufuhr (Anschlußkabel)

21 = Verbindungsleitung

22 = Gehäuse

- 1 -

P a t e n t a n s p r ü c h e

1. Sieder,

gekennzeichnet durch einen Wasserraum (10) (Dampf-
Druckgefäß), dem ein steuerbares, vorzugsweise mit
Strom betreibbares Aufheizsystem zugeordnet ist,
und das ein verstellbares, nach außen geführtes
Dampfrohr (12) aufweist.

2. Sieder nach Anspruch 1, dadurch gekennzeichnet, daß das Aufheiungssystem
aus einem geschlossenen Körper (8) besteht, in dem
bekannte Heizelemente wie Heizrohre und dgl. vorgesehen sind.

3. Sieder nach Anspruch 2, dadurch gekennzeichnet, daß der Körper (8) zylindrisch, mehreckig, oval oder dgl. geformt ist oder
Ringform aufweist.

4. Sieder nach den Ansprüchen 2 und 3, dadurch gekennzeichnet, daß der Körper (8) zentrisch
und rundherum im Abstand von den Wänden des Wasserraums (10) angeordnet ist.

5. Sieder nach wenigstens einem der vorherigen Ansprüche,

   dadurch gekennzeichnet, daß dem Wasserraum (10) ein Schaltraum (4) zugeordnet ist.

6. Sieder nach Anspruch 1, dadurch gekennzeichnet, daß das Dampfrohr (12) durch den Schaltraum (4) geführt und seitlich oder stirnseitig aus diesem nach außen austritt.

7. Sieder nach wenigstens einem der vorherigen Ansprüche,

   dadurch gekennzeichnet, daß das Dampfrohr (12) verlänger- und/oder verdreh- und/oder kippbar am/im Schaltraum (4) vorgesehen ist.

8. Sieder nach wenigstens einem der vorherigen Ansprüche,

   dadurch gekennzeichnet, daß der Wasserraum (10) und der Schaltraum (4) jeder eine Einheit bilden und beide leicht lösbar (z.B. verschraubbar) miteinander verbunden sind.

9. Sieder nach wenigstens einem der vorherigen Ansprüche, gekennzeichnet durch eine Wasserstandsanzeige (9),
zweckmäßig vorgesehen im (äußeren) Mantel des Wasserraumes (10).

10. Sieder nach wenigstens einem der vorherigen Ansprüche,

dadurch gekennzeichnet, daß alle Anschlüsse, Kabelführungen, Schalter (z.B. Hitzeschutzschalter, Thermostate, Kippschalter, Zeits-chalter usw.) im Schaltraum oder am Schaltraum (4) (z.B. der Ein-/Aus-
schaltknopf (5)) angeordnet sind.

11. Sieder nach wenigstens einem der vorherigen Ansprüche,

gekennzeichnet durch einen Wasserreservebehälter (19),
vorzugsweise angeordnet im/am Schaltraum (4) oder
unter Ausnutzung einer eventuell vorgesehenen Doppelummantelung in diesem Mantelraum.

12. Sieder nach wenigstens einem der vorherigen Ansprüche,

gekennzeichnet durch mindestens eine Einfüllöffnung
mit Verschraubung (11) und/oder bei (11a).

- 4 -

13. Sieder nach wenigstens einem der vorherigen Ansprüche,

dadurch gekennzeichnet, daß dem Dampfrohr (12) mindestens ein Rückschlagventil und/oder mindestens eine Düse zugeordnet ist.

14. Sieder nach wenigstens einem der vorherigen Ansprüche,

gekennzeichnet durch eine Einrichtung zum Blockieren z.B. des Schaltknopfes (5).

15. Sieder nach wenigstens einem der vorherigen Ansprüche,

dadurch gekennzeichnet, daß ein weiterer Schalter zum Blockieren während der Aufheizphase vorgesehen ist, d.h. Strom solange fließt (ohne daß der Stromfluß unterbrochen werden kann), bis z.B. Dampf erzeugt ist.

16. Sieder nach wenigstens einem der vorherigen Ansprüche,

dadurch gekennzeichnet, daß mindestens die Innenseiten (Innenflächen) aller oder einiger wasserführenden Teile (z.B. Wasserraum (10), Dampfrohr (12)) mit Kunststoff versehen sind oder aus Kunststoff bestehen, oder daß bei Verwendung eines anderen Materials
die Innenfläche mit Kunststoff beschichtet ist
bzw. daß die Beschichtung der Innenseiten aus einem
dehnbaren Material besteht, so daß bei Temperaturdifferenzen abgelagerter Kalk sich löst und mit dem
Dampf oder Wasser abgeht.

17. Sieder nach wenigstens einem der vorherigen Ansprüche,

dadurch gekennzeichnet, daß der Wasserraum (10) in
mindestens z.B.zwei Räume unterteilt ist.

18. Sieder nach Anspruch 17,

dadurch gekennzeichnet, daß die Räume zylindrisch
ausgebildet und im Abstand zueinander ineinandergeschachtelt sind.

19. Sieder nach den Ansprüchen 17 und 18, dadurch gekennzeichnet, daß die Räume durch mindestens eine Öffnung miteinander verbunden sind.

20. Sieder nach wenigstens einem der vorherigen Ansprüche,

dadurch gekennzeichnet, daß der Wassernachfluß automatisch z.B. über ein Füllrohr von einem Vorratsbehälter bis zu einem gewissen Niveau nachfließt.

- 6 -

21. Sieder nach wenigstens einem der vorherigen Ansprüche,

dadurch gekennzeichnet, daß die Wasserfüllung über
ein z.B. im Boden angebrachtes Ventil erfolgt, und
zwar nach dem Prinzip der kommunizierenden Röhren
(das Gerät wird in diesem Fall beispielsweise in
ein wassergefülltes Gefäß gestellt).

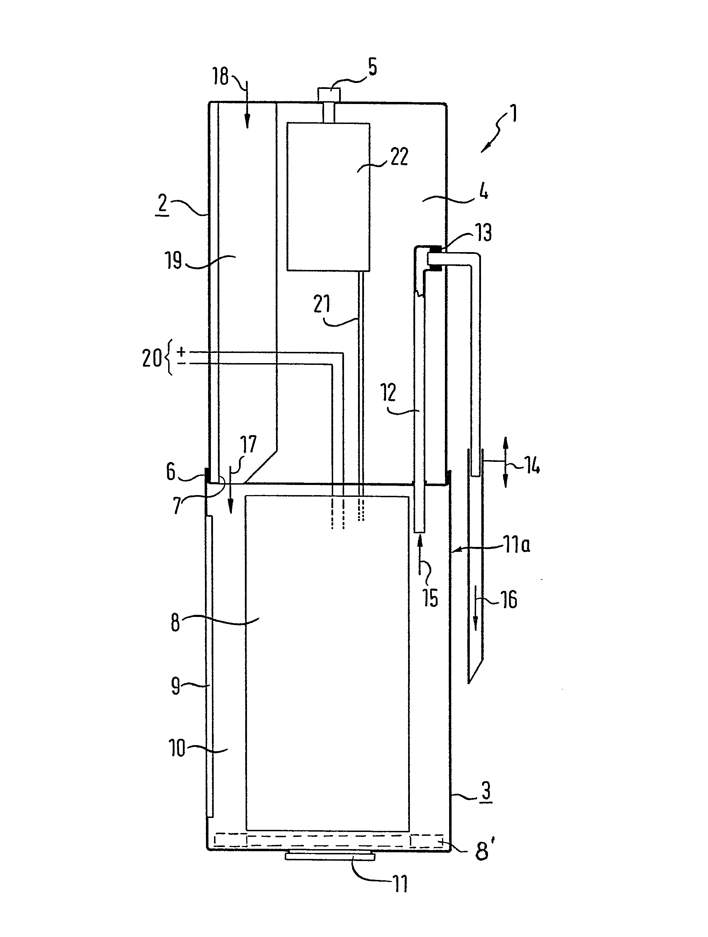

22. Sieder nach den Ansprüchen 2 bis 4,
dadurch gekennzeichnet, daß das Aufheizungssystem
(8') an der oder in Nähe der Bodenfläche des Wasserraumes (10) angeordnet ist (beispielsweise in
Ringform, als Spirale usw.).